# EUROPÄISCHE PATENTSCHRIFT

(11) **EP 2 920 033 B1**
(45) Veröffentlichungstag und Bekanntmachung des Hinweises auf die Patenterteilung: **24.08.2016**
(21) Anmeldenummer: 13786272.8
(22) Anmeldetag: 06.11.2013
(51) Int. Cl.: B60R 21/215, B60R 21/216

(54) **AIRBAGMODUL MIT EINER EIN HERSTELLEREMBLEM TRAGENDEN ABDECKKLAPPE**
AIRBAG MODULE WITH A COVERING FLAP BEARING A MANUFACTURER'S EMBLEM
MODULE DE SAC GONFLABLE COMPRENANT UN CLAPET DE COUVERTURE PORTANT UN EMBLÈME DE FABRICANT

(30) Priorität: 15.11.2012 DE 102012110990
(43) Veröffentlichungstag der Anmeldung: 23.09.2015
(73) Patentinhaber: Autoliv Development AB, 447 83 Vårgårda (SE)
(72) Erfinder: HELLOT, Laurent, F-76220 La Feuillie (FR)
(74) Vertreter: Müller, Karl-Ernst
(86) Internationale Anmeldenummer: PCT/EP2013/073104
(87) Internationale Veröffentlichungsnummer: WO 2014/075961

(56) Entgegenhaltungen:
- EP-A1- 1 967 421
- EP-A2- 1 112 899
- DE-A1- 19 929 762
- DE-C1- 19 548 996
- DE-U1- 20 004 076
- DE-U1- 20 080 100

## Beschreibung

Die Erfindung betrifft ein Airbagmodul mit einem einen Gasgenerator und einen eingefalteten Gassack aufnehmenden Gehäuse, dessen Entfaltungsöffnung durch eine vor Auslösung des Airbagmoduls mittels wenigstens einer Sollbruchstelle an dem Gehäuse fixierten Abdeckklappe verschlossen ist und zur Befestigung der geöffneten Abdeckklappe an dem Gehäuse ein zwischen Abdeckklappe und Gehäuse verlaufendes Fangband angeordnet ist, wobei die auf ihrer Außenseite ein Herstelleremblem tragende Abdeckklappe mittels eines Scharniers an dem Gehäuse festgelegt ist und das Fangband mit seinem einen Ende an einem gehäusefesten Teil befestigt ist.

Ein Airbagmodul ist beispielsweise aus der DE 196 17 758 C1 bekannt. Hierbei ist in einer einen Bestandteil des Gehäuses bildenden Abdeckung eine Entfaltungsöffnung ausgebildet, die vor Auslösung des Airbagmoduls von einer darin ausgebildeten Abdeckklappe verschlossen ist. Die Abdeckklappe ist einstückig mit der Abdeckung ausgebildet, jedoch in ihrer Kontur mittels Sollbruchlinien definiert, so dass die Abdeckklappe bei Auslösung des Airbagmoduls durch den Druck des sich aufblasenden Gassacks aus der Abdeckung herausgetrennt wird und die Entfaltungsöffnung freigibt. Damit Fahrzeuginsassen durch die von der Abdeckung getrennte Abdeckklappe nicht verletzt werden, ist die Abdeckklappe mittels eines Fangbandes an dem Gehäuse fixiert, welches mit seinem einen Ende an der Innenseite der Abdeckklappe und mit seinem anderen Ende an der Innenseite des Gehäuses befestigt ist.

Soweit an derartigen Abdeckklappen von Airbagmodulen häufige Embleme der Hersteller des mit dem Airbagmodul ausgerüsteten Kraftfahrzeuges angebrächt sind, ist in der EP 1 091 865 B1 beschrieben, das Herstelleremblem zusätzlich zu einer Verclipsung mit der Abdeckklappe mittels eines Fangbandes an der Abdeckklappe zu befestigen, dessen eines Ende an der Abdeckklappe und dessen anderes Ende an dem Emblem festgelegt ist.

Ein Airbagmodul mit den eingangs genannten Merkmalen ist aus DE 200 80 100 U1 bekannt, wobei das Fangband mit seinem einen Ende an einem gehäusefesten Teil befestigt ist und im Bereich der Abdeckklappe und/oder des Herstelleremblems mit diesen Komponenten vernietet ist.

Mit der bekannten Fangbandbefestigung einer Abdeckklappe ist der Nachteil verbunden, dass insbesondere bei einer Erhöhung des Gewichts einer Abdeckklappe durch ein daran befestigtes Emblem die einfache Befestigung eines Fangbandendes an der Abdeckklappe nicht sicher genug ist, um nach Auslösung des Airbagmoduls für eine ausreichend sichere Befestigung der Abdeckklappe an dem Gehäuse zu sorgen.

Der Erfindung liegt daher die Aufgabe zugrunde, bei einem Airbagmodul mit den eingangs genannten, gattungsgemäßen Merkmalen für eine sichere Befestigung der Airbagklappe nach deren Freigabe an dem Airbagmodulgehäuse zu sorgen.

Die Lösung dieser Aufgabe ergibt sich einschließlich vorteilhafter Ausgestaltengen und Weiterbildungen der Erfindung aus dem Inhalt der Patentansprüche, welche dieser Beschreibung nachgestellt sind.

Die Erfindung sieht in ihrem Grundgedanken vor, dass das Fangband zumindest einen Bereich der Abdeckklappe und/oder des Herstelleremblems in einer Schlaufe einfasst und dass in der Abdeckklappe zwei im Abstand zueinander angeordnete, einen Bereich der Abdeckklappe zwischen sich einschließende und von der Innenseite der Abdeckklappe in Richtung zu deren Außenseite verlaufende Schlitze zur Aufnahme des dadurch geführten Fangbandes ausgebildet sind. Mit der Erfindung ist der Vorteil verbunden, dass durch die schlaufenartige Einfassung zumindest eines Bereichs der Abdeckklappe und/oder des Herstelleremblems durch das Fangband die in der Fangbandschlaufe gehalterte Abdeckklappe auch bei einer entsprechenden Kraft- bzw. Beschleunigungseinwirkung sich nicht von dem Fangband lösen kann, so dass die Sicherheit der Fixierung der Abdeckklappe bzw. des Herstelleremblems an dem Airbaggehäuse verbessert ist.

In einer ersten Ausführungsform der Erfindung ist vorgesehen, dass das Fangband vollständig im Inneren des Gehäuses verläuft und mit seinem einen Ende an einem innenliegenden gehäusefesten Teil befestigt ist. Hierbei kann es sich beispielsweise um den innenliegenden Bereich einer Stehbolzenbefestigung für den Gasgenerator am Gehäuse handeln.

Gemäß einer alternativen Ausführungsform der Erfindung kann vorgesehen sein, dass das Fangband mit seinem einen Ende an der Außenseite des Gehäuses befestigt und durch eine Gehäuseöffnung in das Innere des Gehäuses geführt ist.

Hierbei ist nach einem Ausführungsbeispiel der Erfindung vorgesehen, dass die Gehäuseöffnung in einer Seitenwand des Gehäuses derart angeordnet ist, dass das durch die Gehäuseöffnung geführte Fangband innenseitig des Scharniers zwischen gefaltetem Gassack und Scharnier verläuft. Hiermit ist der zusätzliche Vorteil einer Verstärkung des Scharnierbereichs und eines Schutzes des Scharniers bei Auslösung des Airbagmoduls gegen den sich entfaltenden und dabei auch gegen das Scharnier drückenden Gassack verbunden.

In einer zweckmäßigen Weise kann vorgesehen sein, dass das Fangband mit seinen beiden Enden auf der Außenseite des Gehäuses festgelegt und in einer doppellagigen Anordnung durch das Scharnier hindurchgeführt ist, wobei innenseitig des Gehäuses die beiden Lagen des Fangbandes die die Abdeckklappe einfassende Schlaufe ausbilden, und wobei entweder die beiden Enden des Fangbandes an einem aus dem Gehäuse herausragenden Stehbolzen des Gasgenerators festgelegt sind oder auf der Außenseite des Gehäuses ein Befestigungsstift angebracht ist, an dem die beiden Enden des Fangbandes festgelegt sind.

Hierbei kann in einer ersten Ausführungsform der Erfindung vorgesehen sein, dass das Fangband an der Innenseite der Abdeckklappe entlang geführt ist und zur Ausbildung der Schlaufe durch einen der Schlitze nach außen geführt ist, die Abdeckklappe in einem Verlauf zwischen Abdeckklappe und Herstelleremblem außen umschließt und durch den anderen Schlitz in das Innere des Gehäuse zurückgeführt ist.

Soweit das Fangband von dem Scharnier der Abdeckklappe herkommend jeweils an der Innenseite der Abdeckklappe entlang geführt ist, ist damit der besondere, zusätzliche Vorteil verbunden, dass das Fangband das Gleiten des Gassackes an der Innenseite der Abdeckklappe bei der Öffnung der Abdeckklappe durch den sich aufblasenden Gassack verbessert, da die entsprechende Reibung vermindert ist.

Alternativ kann vorgesehen sein, dass das Fangband an der Innenseite der Abdeckklappe entlang geführt ist und zur Ausbildung der Schlaufe durch die beiden Schlitze und durch einen in der Abdeckklappe ausgebildeten, zwischen den Schlitzen verlaufenden inneren Kanal hindurchgeführt ist.

In einer alternativen Ausführungsform kann vorgesehen sein, dass in der Abdeckklappe sowie in dem Herstelleremblem zwei im Abstand zueinander angeordnete, einen Bereich der Abdeckklappe sowie des Herstelleremblems zwischen sich einschließende und von der Innenseite der Abdeckklappe in Richtung zur Außenseite fluchtend verlaufende Schlitze zur Aufnahme des dadurch geführten Fangbandes ausgebildet sind und das Fangband an der Innenseite der Abdeckklappe entlang geführt ist und zur Ausbildung der Schlaufe durch die beiden Schlitze in der Abdeckklappe sowie in dem Herstelleremblem und durch einen in dem Herstelleremblem ausgebildeten, zwischen den Schlitzen verlaufenden inneren Kanal hindurchgeführt ist. Hiermit ist der Vorteil verbunden, dass insbesondere bei großflächigen und/oder schweren Herstelleremblemen das Herstelleremblem ebenfalls unmittelbar durch das Fangband gesichert ist.

In der Zeichnung ist ein Ausführungsführungsbeispiel der Erfindung wiedergegeben, welches nachstehend beschrieben ist. Es zeigen:
- Fig. 1: ein Airbagmodul mit einer ein Herstelleremblem tragenden Abdeckklappe in einer schematischen Ansicht vor Auslösung bei geschlossener Abdeckklappe,
- Fig. 2: das Airbagmodul gemäß Figur 1 nach Auslösung und Öffnung der Abdeckklappe.

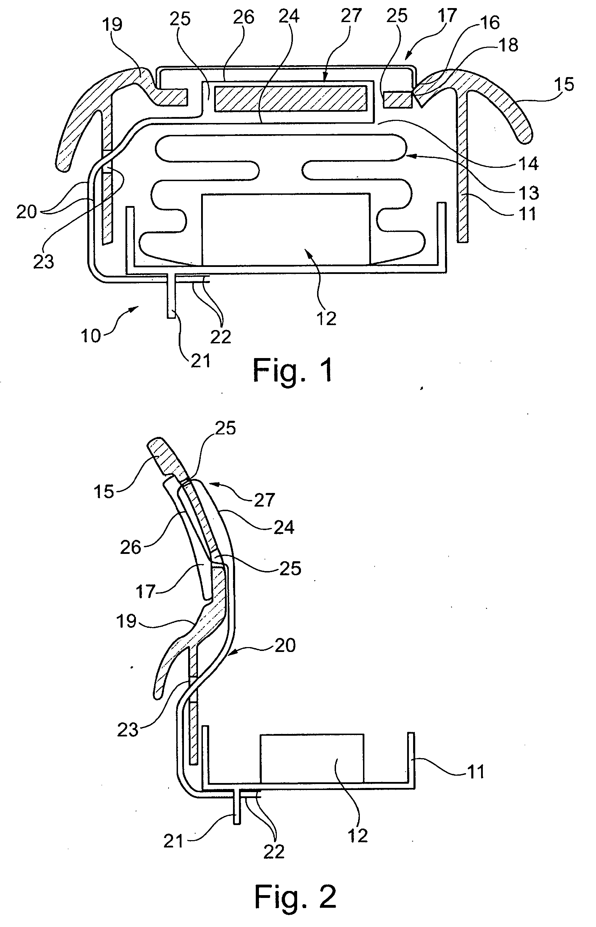

Das in Figur 1 schematisch dargestellte Airbagmodul 10 hat ein topfförmiges Gehäuse 11, auf dessen Boden ein Gasgenerator 12 angeordnet ist. Ferner ist im Inneren des Gehäuses 11 ein gefalteter Gassack 13 untergebracht, der bei Auslösung des Airbagmoduls 10 von dem Gasgenerator 12 aufgeblasen wird. Auf der dem Gasgenerator 12 gegenüberliegenden Oberseite des Gehäuses 11 ist eine Entfaltungsöffnung 14 für den sich bei Auslösung entfaltenden Gassack 13 ausgebildet, die von einer Abdeckklappe 15 verschlossen ist. Die Abdeckklappe 15 ist bei dem dargestellten Ausführungsbeispiel einstückig mit der aufstehenden äußeren Seitenwand des Gehäuses 11 verbunden, wobei auf der in der Darstellung rechten Seite der Abdeckklappe 15 eine Sollbruchstelle 18 angedeutet ist, an welcher sich die Abdeckklappe bei einem entsprechend von dem sich aufblasenden Gassack 13 ausgeübten Druck löst. Der Sollbruchstelle gegenüberliegend ist an der Abdeckklappe 15 ein Scharnier 19 ausgebildet, dessen Scharnierfunktion sich beim Aufschwenken der Abdeckklappe 15 in die in Figur 2 dargestellte Stellung durch Verformung des entsprechenden Abdeckklappenbereichs ergibt.

Die Abdeckklappe 15 ist auf ihrer äußeren Oberseite mit einer Einziehung 16 versehen, in welcher ein Herstelleremblem 17 angeordnet ist, welches in einer nicht weiter dargestellten, geeigneten Weise mit der Abdeckklappe 15 fest verbunden ist.

Zur Befestigung der Abdeckklappe 15 an dem Gehäuse 11 nach dem Aufschwenken der Abdeckklappe 15 in die aus Figur 2 ersichtliche Stellung ist ein Fangband 20 vorgesehen und angeordnet, dessen beide Fangbandenden 22 auf der Außenseite des Gehäuses 11 an einem in dessen Bodenbereich angebrachten Befestigungsstift 21 befestigt sind. Dementsprechend ist das doppellagig von dem Befestigungsstift 21 wegführende Fangband 20 durch eine in der unterhalb des Scharniers 19 gelegenen Seitenwand des Gehäuses 11 ausgebildete Gehäuseöffnung 23 in das Innere des Gehäuses 11 geführt und verläuft in dieser doppellagigen Anordnung zunächst zwischen dem Scharnier 19 und dem gefalteten Gassack 13.

Zur Ausbildung einer zumindest einen zentralen Bereich der Abdeckklappe 15 einfassenden Schlaufe 27 des Fangbandes 20 sind in der Abdeckklappe 15 zwei im Abstand zueinander angeordnete, den zentralen Bereich der Abdeckklappe 15 zwischen sich einschließende und von der Innenseite der Abdeckklappe 15 in Richtung zu deren Außenseite verlaufende Schlitze 25 zur Aufnahme des dadurch geführten Fangbandes 20 ausgebildet. Im Hinblick auf die schlaufenartige Führung des Fangbandes 20 ist zunächst eine innere Fangbandlage 24 an der Innenseite der Abdeckklappe 15 entlang geführt und zur Ausbildung der Schlaufe 27 durch einen der Schlitze 25 nach außen geführt; im Anschluss daran umschließt das Fangband 20 mit seiner äußeren Fangbandlage 26 den zwischen den Schlitzen 25 liegenden Bereich der Abdeckklappe dadurch, dass die äußere Fangbandlage 26 zwischen Abdeckklappe 15 und Herstelleremblem 17 außen entlang und durch den anderen Schlitz 25 in das Innere des Gehäuses 11 zurückgeführt ist, so dass sich durch die innere Fangbandlage 24 und äußere Fangbandlage 26 ein schlaufenartiges Einfassen des zentralen Bereichs der Abdeckklappe 15 ergibt, wobei außerhalb des von der Schlaufe 27 eingeschlossenen Bereichs der Abdeckklappe 15 eine doppellagige Anordnung des Fangbandes gegeben ist.

Es ist erkennbar, dass nach Auslösung des Airbagmoduls 10 sich die Abdeckklappe an der Sollbruchstelle 18 löst und nach außen aufschwenkt, wobei das in der Abdeckklappe 15 ausgebildete Scharnier 19 verformt wird. Während dieses Vorganges ist das Scharnier 19 durch das doppellagig daran längs laufende Fangband 20 geschützt. In dem aufgeschwenkten Zustand der Abdeckklappe 15 ist die Abdeckklappe 15 sicher durch die sie in einem Zentralbereich einschließende Schlaufe 27 des Fangbandes sicher gehalten.

## Patentansprüche

1. Airbagmoduls (10) mit einem einen Gasgenerator (12) und einen eingefalteten Gassack (13) aufnehmenden Gehäuse (11), dessen Entfaltungsöffnung (14) durch eine vor Auslösung des Airbagmoduls (10) mittels wenigstens einer Sollbruchstelle (18) an dem Gehäuse (11) fixierten Abdeckklappe (15) verschlossen ist und zur Befestigung der geöffneten Abdeckklappe (15) an dem Gehäuse (11) ein zwischen Abdeckklappe (15) und Gehäuse (11) verlaufendes Fangband (20) angeordnet ist, wobei die auf ihrer Außenseite ein Herstelleremblem (17) tragende Abdeckklappe (15) mittels eines Scharniers (19) an dem Gehäuse (11) festgelegt ist und das Fangband (20) mit seinem einen Ende (22) an einem gehäusefesten Teil befestigt ist, **dadurch gekennzeichnet, dass** das Fangband (20) zumindest einen Bereich der Abdeckklappe (15) und/oder des Herstelleremblems (17) in einer Schlaufe (27) einfasst und dass in der Abdeckklappe (15) zwei im Abstand zueinander angeordnete, einen Bereich der Abdeckklappe (15) zwischen sich einschließende und von der Innenseite der Abdeckklappe (15) in Richtung zu deren Außenseite verlaufende Schlitze (25) zur Aufnahme des dadurch geführten Fangbandes (20) ausgebildet sind.

2. Airbagmodul nach Anspruch 1, **dadurch gekennzeichnet, dass** das Fangband (20) vollständig im Inneren des Gehäuses (11) verläuft und mit seinem einen Ende an einem innenliegenden gehäusefesten Teil befestigt ist.

3. Airbagmodul nach Anspruch 1, **dadurch gekennzeichnet, dass** das Fangband (20) mit seinem einen Ende (22) an der Außenseite des Gehäuses (11) befestigt und durch eine Gehäuseöffnung (23) in das Innere des Gehäuses (11) geführt ist.

4. Airbagmodul nach Anspruch 3, **dadurch gekennzeichnet, dass** die Gehäuseöffnung (23) in einer Seitenwand des Gehäuses (11) derart angeordnet ist, dass das durch die Gehäuseöffnung (23) geführte Fangband (20) innenseitig des Scharniers (19) zwischen gefaltetem Gassack (13) und Scharnier (19) verläuft.

5. Airbagmodul nach Anspruch 3 oder 4, **dadurch gekennzeichnet, dass** das Fangband (20) mit seinen beiden Enden (22) auf der Außenseite des Gehäuses (11) festgelegt und in einer doppellagigen Anordnung (24, 26) durch die Gehäuseöffnung (23) hindurchgeführt ist, wobei innenseitig des Gehäuses (11) die beiden Lagen (24, 26) des Fangbandes (20) die die Abdeckklappe (15) einfassende Schlaufe (27) ausbilden.

6. Airbagmodul nach einem der Ansprüche 4 oder 5, **dadurch gekennzeichnet, dass** die beiden Enden (22) des Fangbandes (20) an einem aus dem Gehäuse (11) herausragenden Stehbolzen des Gasgenerators (12) festgelegt sind.

7. Airbagmodul nach einem der Ansprüche 4 bis 6, **dadurch gekennzeichnet, dass** auf der Außenseite des Gehäuses (11) ein Befestigungsstift (21) angebracht ist, an dem die beiden Enden (22) des Fangbandes (20) festgelegt sind.

8. Airbagmodul nach Anspruch 1, **dadurch gekennzeichnet, dass** das Fangband (20) an der Innenseite der Abdeckklappe (15) entlang geführt ist und zur Ausbildung der Schlaufe (22) durch einen der Schlitze (25) nach außen geführt ist, die Abdeckklappe (15) in einem Verlauf zwischen Abdeckklappe (15) und Herstelleremblem (17) außen umschließt und durch den anderen Schlitz (25) in das Innere des Gehäuse (11) zurückgeführt ist.

9. Airbagmodul nach Anspruch 1, **dadurch gekennzeichnet, dass** das Fangband (20) an der Innenseite der Abdeckklappe (15) entlang geführt ist und zur Ausbildung der Schlaufe (27) durch die beiden Schlitze (25) und durch einen in der Abdeckklappe (15) ausgebildeten, zwischen den Schlitzen (25) verlaufenden inneren Kanal hindurchgeführt ist

10. Airbagmodul nach Anspruch 1, **dadurch gekennzeichnet, dass** in der Abdeckklappe (15) sowie in dem Herstelleremblem (17) zwei im Abstand zueinander angeordnete, einen Bereich der Abdeckklappe (15) sowie des Herstelleremblems (17) zwischen sich einschließende und von der Innenseite oder Abdeckklappe (15) in Richtung zur Außenseite fluchtend verlaufende Schlitze (25) zur Aufnahme des dadurch geführten Fangbandes (20) ausgebildet sind und das Fangband (20) an der Innenseite der Abdeckklappe (15) entlang geführt ist und zur Ausbildung der Schlaufe (27) durch die beiden Schlitze (25) in der Abdeckklappe (15) sowie in dem Herstelleremblem (17) und durch einen in dem Herstelleremblem (17) ausgebildeten, zwischen den Schlitzen (25) verlaufenden inneren Kanal hindurchgeführt ist.

## Claims

1. Airbag module (10) with a housing (11) receiving a gas generator (12) and a folded gas bag (13), the deployment opening (14) of which housing is closed by a cover flap (15) fixed on the housing (11) before the release of the airbag module (10) by at least one theoretical breaking position (18), and a catch band (20) is arranged running between the cover flap (15) and the housing (11) for fastening the open cover flap (15) on the housing (11), wherein the cover flap (15) carrying a manufacturer's emblem (17) on its outside is fastened by a hinge (19) on the housing (11) and the catch band (20) is fastened by its one end (22) on a part fixed to the housing, **characterized by** that the catch band (20) borders at least one area of the cover flap (15) and/or of the manufacture's emblem (17) in a loop (27) and that two slots (25) are formed for receiving the catch band (20) guided through them, which slots are arranged at a distance from one another, enclose an area of the cover flap (15) between them and run from the inside of the cover flap (15) in the direction of its outside.

2. Airbag module according to Claim 1, **characterized by** that the catch band (20) runs completely in the inside of the housing (11) and is fastened by its one end on an inwardly located part fixed to the housing.

3. Airbag module according to Claim 1, **characterized by** that the catch band (20) is fastened by its one end (22) to the outside of the housing (11) and is run through a housing opening (23) into the interior of the housing (11).

4. Airbag module according to Claim 3, **characterized by** that the housing opening (23) is arranged in a side wall of the housing (11) in such a manner that the catch band (20) guided through the housing opening (23) runs inside the hinge (19) between the folded gas bag (13) and the hinge (19).

5. Airbag module according to Claim 3 or 4, **characterized by** that the catch band (20) is fastened by its two ends (22) on the outside of the housing (11) and is run through the housing opening (23) in a double-layer arrangement (24, 26), wherein on the inside of the housing (11) the two layers (24, 26) of the catch band (20) form the loop (27) bordering the cover flap (15).

6. Airbag module according to one of Claims 4 or 5, **characterized by** that the two ends (22) of the catch band (20) are fastened to a stay bolt of the gas generator (12) which bolt projects from the housing.

7. Airbag module according to one of Claims 4 to 6, **characterized by** that a fastening pin is (21) is attached to the outside of the housing (11) on which pin the two ends (22) of the catch band (20) are fastened.

8. Airbag module according to Claim 1, **characterized by** that the catch band (20) is guided along the inside of the cover flap (15) and is run through one of the slots (25) to the outside for forming the loop (22), surrounds the cover flap (15) in a course between the cover flap (15) and the manufacturer's emblem (17) on the outside and is guided back through the other slot (25) into the inside of the housing (11).

9. Airbag module according to Claim 1, **characterized by** that the catch band (20) is guided along the inside of the cover flap (15) and is guided for forming the loop (27) through the two slots (25) and through an inner conduit formed in the cover flap (15) and running between the slots (25).

10. Airbag module according to Claim 1, **characterized by** that two slots (25) for receiving the catch band (20) run through them are formed arranged at a distance from each other in the cover flap (15) and in the manufacturer's emblem (17), enclosing an area of the cover flap (15) and of the manufacturer's emblem (17) between them and run in alignment from the inside of the cover flap (15) in the direction of the outside, and that the catch band (20) runs along the inside of the cover flap (15) and is guided for forming the loop (27) through the two slots (25) in the cover flap (15) and in the manufacturer's emblem (17) and through an inner conduit formed in the manufacturer's emblem (17) and running between the slots (25).

## Revendications

1. Module de sac gonflable (10) comprenant un boîtier (11) recevant un générateur de gaz (12) et un sac gonflable (13) replié, l'orifice de déploiement (14) du boîtier étant fermé par un clapet de couverture (15) fixé sur le boîtier (11) avant le déclenchement du module de sac gonflable (10) au moyen d'au moins un point destiné à la rupture (18) et une bande de retenue (20) qui s'étend entre le clapet de couverture (15) et le boîtier (11) étant disposée pour attacher le clapet de couverture (15) ouvert au boîtier (11), le clapet de couverture (15) qui porte un emblème de fabricant (17) sur son côté extérieur étant fixé au boîtier (11) au moyen d'une charnière (19) et la bande de retenue (20) étant attachée par l'une de ses extrémités (22) à une partie solidaire du boîtier, **caractérisé en ce que** la bande de retenue (20) entoure au moins une zone du clapet de couverture (15) et/ou de l'emblème de fabricant (17) dans une boucle (27) et **en ce que** deux fentes (25) disposées à distance l'une de l'autre, enfermant entre elles une zone du clapet de couverture (15) et s'étendant à partir du côté intérieur du clapet de couverture (15) en direction de son côté extérieur sont formées dans le clapet de couverture (15) pour recevoir la bande de retenue (20) guidée à travers elles.

2. Module de sac gonflable selon la revendication 1, **caractérisé en ce que** la bande de retenue (20) s'étend entièrement à l'intérieur du boîtier (11) et est attachée par l'une de ses extrémités à une partie intérieure solidaire du boîtier.

3. Module de sac gonflable selon la revendication 1, **caractérisé en ce que** la bande de retenue (20) est attachée par l'une de ses extrémités (22) au côté extérieur du boîtier (11) et est guidée par un orifice du boîtier (23) dans l'intérieur du boîtier (11).

4. Module de sac gonflable selon la revendication 3, **caractérisé en ce que** l'orifice du boîtier (23) est disposé dans une paroi latérale du boîtier (11) de telle manière que la bande de retenue (20) guidée à travers l'orifice du boîtier (23) s'étend du côté intérieur de la charnière (19) entre le sac gonflable (13) plié et la charnière (19).

5. Module de sac gonflable selon la revendication 3 ou 4, **caractérisé en ce que** la bande de retenue (20) est fixée par ses deux extrémités (22) sur le côté extérieur du boîtier (11) et est guidée à travers l'orifice du boîtier (23) dans une configuration à deux couches (24, 26), les deux couches (24, 26) de la bande de retenue (20) formant, du côté intérieur du boîtier (11), la boucle (27) entourant le clapet de couverture (15).

6. Module de sac gonflable selon l'une des revendications 4 ou 5, **caractérisé en ce que** les deux extrémités (22) de la bande de retenue (20) sont fixées sur un goujon du générateur de gaz (12) dépassant du boîtier (11).

7. Module de sac gonflable selon l'une des revendications 4 à 6, **caractérisé en ce qu'**une tige de fixation (21) est montée sur le côté extérieur du boîtier (11), sur laquelle les deux extrémités (22) de la bande de retenue (20) sont fixées.

8. Module de sac gonflable selon la revendication 1, **caractérisé en ce que** la bande de retenue (20) est guidée le long du côté intérieur du clapet de couverture (15) et est guidée à travers l'une des fentes (25) vers l'extérieur pour former la boucle (22), entoure le clapet de couverture (15) par l'extérieur dans un trajet entre le clapet de couverture (15) et l'emblème de fabricant (17) et est ramenée dans l'intérieur du boîtier (11) à travers l'autre fente (25).

9. Module de sac gonflable selon la revendication 1, **caractérisé en ce que** la bande de retenue (20) est guidée le long du côté intérieur du clapet de couverture (15) et est guidée à travers les deux fentes (25) et à travers un conduit intérieur s'étendant entre les fentes (25) et formé dans le clapet de couverture (15) pour former la boucle (27).

10. Module de sac gonflable selon la revendication 1, **caractérisé en ce que** deux fentes (25) disposées à distance l'une de l'autre, enfermant entre elles une zone du clapet de couverture (15) ainsi que de l'emblème de fabricant (17) et s'étendant de niveau à partir du côté intérieur du clapet de couverture (15) en direction du côté extérieur sont formées dans le clapet de couverture (15) ainsi que dans l'emblème de fabricant (17) pour recevoir la bande de retenue (20) guidée à travers elles et la bande de retenue (20) est guidée le long du côté intérieur du clapet de couverture (15) et est guidée à travers les deux fentes (25) dans le clapet de couverture (15) ainsi que dans l'emblème de fabricant (17) et à travers un conduit intérieur s'étendant entre les fentes (25) et formé dans l'emblème de fabricant (17) pour former la boucle (27).
